# EUROPEAN PATENT APPLICATION

(11) **EP 4 831 474 A1**
(43) Date of publication of application: **28.10.2026**
(21) Application number: 25222064.5
(22) Date of filing: 10.12.2025
(51) Int. Cl.: F02M 21/02, F16K 1/00, F16K 27/00, F16K 41/00, B63H 21/38

(54) **GAS VALVE TRAIN**

(30) Priority: 22.04.2025 KR 20250052550
(71) Applicant: Koval Co., Ltd, Busan 49498 (KR)
(72) Inventor: Choi, Young Hwan, 49506 Busan (KR); Cha, Jung Hoon, 47002 Busan (KR)
(74) Representative: RGTH

(57) **Abstract**

Proposed is a gas valve train including a main block in which an internal passage for supplying fuel gas to an engine is provided, and a plurality of valve mounting portions is provided on an upper surface thereof, recessed downward to communicate with the internal passage, a flow control valve mounted on each of the valve mounting portions, and configured to control an opening of the internal passage, and a controller configured to check a state of fuel gas supplied to the main block and control an operation of the flow control valve so that a pressure and flow rate of fuel required by the engine are supplied.

## Description

### CROSS REFERENCE TO RELATED APPLICATION

The present application claims priority to Korean Patent Application No. 10-2025-0052550, filed April 22, 2025, the entire contents of which is incorporated herein for all purposes by this reference.

### BACKGROUND

### Technical Field

The present disclosure relates to a gas valve train and, more particularly, to a gas valve train equipped with a flow-control valve that provides stable sealing performance even in pressure environments exceeding 400 bar.

### Description of the Related Art

Around the world, regulations on exhaust gas emissions are being strengthened to protect the environment, and the International Maritime Organization (IMO) is strictly limiting sulfur content and nitrogen oxides emissions in designated Emission Control Areas (ECAs) with the goal of reducing greenhouse gases and achieving net-zero emissions.

In line with this trend, ships are adopting gas fuels like liquefied natural gas (LNG) and methanol as transitional, eco-friendly alternatives to conventional fossil fuels.

For marine engines that are supplied with low-pressure LNG fuel at 20 bar or below, a gas valve unit (GVU) is installed between the fuel gas supply system (FGSS) and the engine. In contrast, for engines that require the supply of ultra-high-pressure gas fuel at 150 bar or higher, a gas valve train (GVT), which can shut off the LNG supply in emergency situations, needs to be installed.

Numerous valves are installed in the fuel supply line to safely control the supply of LNG fuel, and these valves are collectively housed in a designated enclosure that meets safety standards, known as the GVU. The GVT extends the concept of the GVU and serves as an additional assembly of valves installed within the fuel supply line itself.

Since the GVT operates under ultra-high pressure, a malfunction can lead to severe accidents. Thus, the GVT is composed of a valve control system capable of immediately shutting off the LNG fuel, as well as a control system that ensures the smooth supply of ultra-high-pressure gas to the engine.

In this regard, Korean Patent No. 10-2595319 discloses an example of a ship to which a gas valve train is applied, and an example of such a gas valve train.

As an example, a man electric gas injection (ME-GI) engine, which is driven by LNG supplied as fuel, may be applied as a propulsion engine for a ship.

In the case of such commercial marine engines that use LNG as fuel, the LNG is compressed and supplied at a high pressure of approximately 150 to 400 bar, and the fuel supply line that delivers LNG from the LNG storage tank to the engine is designed to pass through the gas valve train.

A typical gas valve train known in the industry consists of: a block in which multiple ship-fuel internal passages 19 and multiple purge-gas internal passages 19 are formed; a plurality of valves installed along the side of the block to selectively open and close individual internal passages 19, and multiple pressure transmitters for monitoring the condition of the ship fuel. The operation of each valve is controlled by a separate valve control unit.

With this configuration, when the ship's fuel is supplied from the LNG storage tank to the engine, the supplied fuel passes through the gas valve train, allowing the fuel to be inspected in advance so that fuel in an optimal condition required by the engine can be delivered.

In the event of an emergency, such as an engine shutdown, the valve control unit operates to close the valves connected to the ship-fuel internal passages 19 of the gas valve train, while simultaneously opening the valves connected to the purge-gas internal passages 19. This forces the residual ship fuel in the supply line to be expelled, thereby preventing potential safety accidents on the ship, such as explosions.

Meanwhile, LNG supplied to the gas valve train is an ultra-high-pressure gas of approximately 150 to 400 bar, and therefore, the durability of each component of the gas valve train must be ensured.

Recently, due to factors such as the increasing size of ships and the need to improve fuel efficiency in response to environmental regulations, larger engines are being adopted and engine output is being enhanced. Consequently, the operating pressure of marine engine gas valve trains is exceeding 400 bar, necessitating a design pressure that also exceeds 400 bar.

However, in conventional gas valve trains, O-rings are applied to valves in the drive section to ensure a sealed structure. While a typical O-ring sealing structure can operate under pressures up to 400 bar, in pressure environments exceeding 400 bar, O-rings may be damaged or displaced, compromising the seal and causing gas leakage.

Accordingly, there is a demand for the development of a new type of valve, and a gas valve train incorporating the valve, which can reliably maintain a sealed state and offer superior durability even in pressure environments exceeding 400 bar.

### Document of Related Art

(Patent Document 1) Korean Patent No. 10-2595319
(Patent Document 2) Korean Patent No. 10-1577804

### SUMMARY

Accordingly, the present disclosure has been made keeping in mind the above problems occurring in the related art, and the present disclosure aims to provide a gas valve train capable of effectively controlling ultra-high-pressure gas and ensuring stable sealing performance.

In order to achieve the above objective, according to an aspect of the present disclosure, there is provided a gas valve train including: a main block in which an internal passage for supplying fuel gas to an engine is provided, and a plurality of valve mounting portions is provided on an upper surface thereof, recessed downward to communicate with the internal passage; a flow control valve mounted on each of the valve mounting portions, and configured to control an opening of the internal passage; and a controller configured to check a state of the fuel gas supplied to the main block and control an operation of the flow control valve so that a pressure and flow rate of fuel required by the engine are supplied, wherein the flow control valve may include: a bonnet installed on the upper surface of the main block, outside the valve mounting portion, and having a hollow center extending vertically; a cage provided below the bonnet and inserted into the valve mounting portion to be arranged on the internal passage, having a cage space formed therein, and including a cage gas inlet and a cage gas outlet at a lower part thereof that connect the cage space to the internal passage; a stem that penetrates the center of the bonnet and has a lower end thereof positioned in the cage space; a cylinder portion provided above the bonnet, connected to an upper end of the stem, and configured to move the stem up and down in a reciprocating manner; and a plug provided in the cage space, connected to the lower end of the stem to reciprocate together with the stem, configured to open and close the internal passage by opening and closing between the cage gas inlet and the cage gas outlet through the reciprocating movement, wherein a U-seal for sealing may be provided between an outer wall of the plug and an inner wall of the cage, above the cage gas inlet and the cage gas outlet.

In addition, the plug may have a plug through-hole that vertically penetrates a center thereof and communicates with the cage gas inlet, so that when the plug descends, the fuel gas may flow through the plug through-hole into the cage space above the plug, thereby equalizing pressure, and the U-seal may be provided, above the cage gas inlet and the cage gas outlet, on the inner wall of the cage within a constantly facing section L of the cage, defined as upper and lower sections of the cage that constantly face the outer wall of the plug during the reciprocating movement of the plug.

In addition, an upper sealing-member mounting portion recessed outward may be provided on the inner wall of the cage at an upper part of the constantly facing section L, whereas a lower sealing-member mounting portion recessed outward may be provided at a lower part of the constantly facing section L, and the U-seal may be provided on each of the upper sealing-member mounting portion and the lower sealing-member mounting portion, wherein the U-seal provided on the upper sealing-member mounting portion may have an internal space open upward, whereas the U-seal provided on the lower sealing-member mounting portion may have an internal space open downward.

In addition, the cage may include: a lower cage in which the cage gas inlet and the cage gas outlet are provided and constituting the lower part of the cage; a middle cage stacked on an upper surface of the lower cage and constituting a middle part of the cage; and an upper cage stacked on an upper surface of the middle cage and constituting an upper part of the cage, wherein the upper sealing-member mounting portion may be provided between the upper cage and the middle cage and be opened upward or downward by a separation of the upper cage and the middle cage, and the lower sealing-member mounting portion may be provided between the lower cage and the middle cage and be opened upward or downward by a separation of the lower cage and the middle cage.

In addition, a bonnet sealing-member mounting portion, recessed outward in a stepped manner, may be provided on a lower end of an inner peripheral surface of the bonnet, and a U-seal for sealing a gap between the inner peripheral surface of the bonnet and the stem may be further provided on the bonnet sealing-member mounting portion.

The gas valve train according to an embodiment of the present disclosure can be expected to have the following effects.

Since the plurality of valve-mounting portions is formed on the upper surface of the main block, on which the flow-control valves are mounted, and by arranging all the flow-control valves on the upper surface of the main block, the assembly of the flow-control valves can be facilitated, and maintenance convenience can also be improved.

In addition, by applying a U-seal in place of a conventional O-ring as a means for sealing between the plug and the cage, a stable sealing state can be maintained between the plug and the cage even in ultra-high-pressure environments exceeding 400 bar, and the flow-control valves can attain enhanced durability and improved operational reliability.

In particular, to establish gas pressure equilibrium between the space above the plug and the space below the plug within the cage during the vertical movement of the plug, a plug through-hole vertically penetrating the plug is formed. In this configuration, the U-seal is provided between the opposing outer wall of the plug and the inner wall of the cage, and the U-seal is arranged at upper and lower parts of the region in which the plug and the cage remain in constant contact. At this time, the U-seal provided at the upper part of the constant-contact region is arranged such that the internal space thereof opens upward, whereas the U-seal provided at the lower part of the constant-contact region is arranged such that the internal space thereof opens downward. Accordingly, when the plug descends, gas introduced into the cage space above the plug through the plug through-hole is more effectively prevented from entering the gap between the plug and the upper part of the cage. Likewise, when the plug ascends, gas introduced into the cage space below the plug is more effectively prevented from entering the gap between the plug and the lower part of the cage.

In addition, as the stem penetrates the bonnet such that the lower end thereof is positioned within the cage space, the U-seal is provided between the inner peripheral surface of the bonnet and the stem, the U-seal being configured such that the internal opening thereof faces downward toward the cage space. As a result, gas introduced into the cage space above the plug through the plug through-hole can be more effectively prevented from entering the gap between the bonnet and the stem.

### BRIEF DESCRIPTION OF THE DRAWINGS

The above and other objectives, features, and other advantages of the present disclosure will be more clearly understood from the following detailed description when taken in conjunction with the accompanying drawings, in which:
FIGS. 1 and 2 are perspective views of a gas valve train viewed from different directions according to an embodiment of the present disclosure;
FIG. 3 is a cross-sectional view of a valve mounting portion provided on a main block according to an embodiment of the present disclosure;
FIG. 4 is a longitudinal sectional view of a flow-control valve in a state where a plug has descended to shield an internal flow passage according to an embodiment of the present disclosure;
FIG. 5 is a longitudinal sectional view of a flow-control valve in a state where a plug has ascended to open an internal flow passage according to an embodiment of the present disclosure;
FIG. 6 is an enlarged view of the T part in FIG. 4;
FIG. 7 is an exploded view of a cage according to an embodiment of the present disclosure; and
FIG. 8 is a view showing a U-seal according to an embodiment of the present disclosure.

### DETAILED DESCRIPTION

Hereinafter, embodiments of the present disclosure will be described in detail with reference to the attached drawings.

However, the spirit of the present disclosure is not limited to the presented embodiments, and other regressive inventions or other embodiments within the scope of the present disclosure can be easily proposed by adding, modifying, or deleting other components.

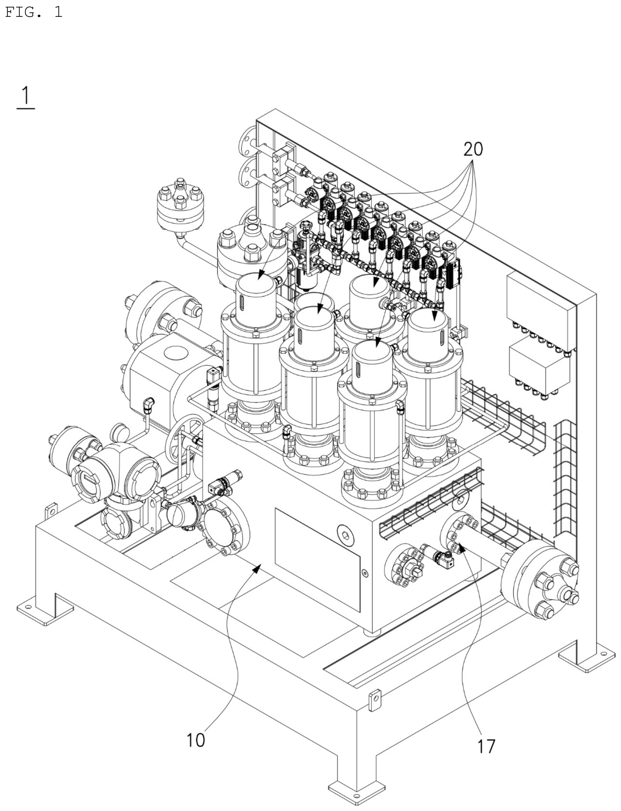

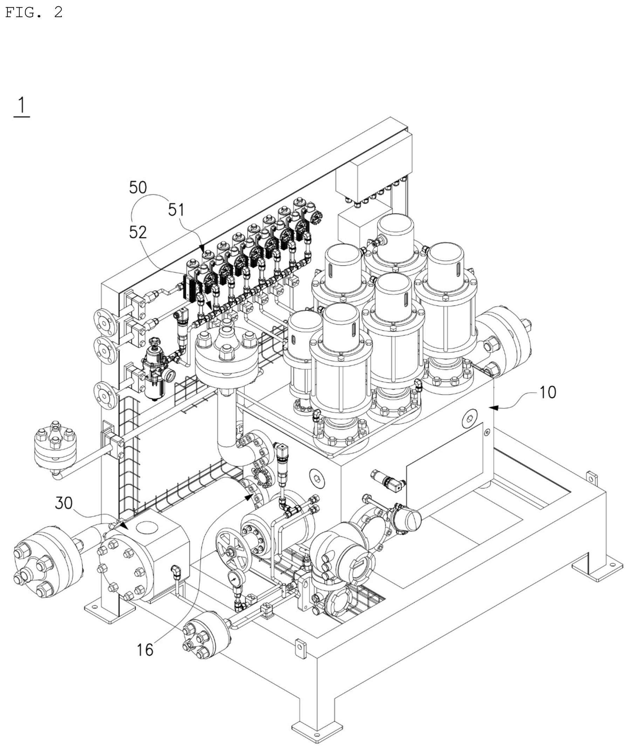

FIGS. 1 and 2 are perspective views of a gas valve train viewed from different directions according to an embodiment of the present disclosure.

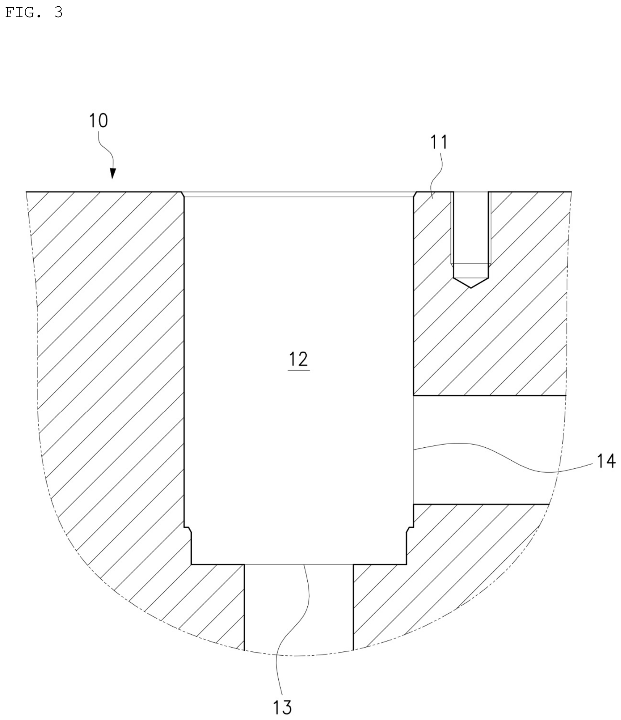

FIG. 3 is a cross-sectional view of a valve mounting portion provided on a main block according to an embodiment of the present disclosure.

A gas valve train 1 according to an embodiment of the present disclosure is provided in a fuel supply line between a fuel gas supply system (FGSS) and an engine using LNG as fuel, and functions to ensure an optimal supply of LNG that matches the engine's requirements from the fuel gas supply system to the engine.

The gas valve train 1 according to an embodiment of the present disclosure may include a main block 10, a flow control valve 20, and a controller 50.

The main block 10 may have a plurality of internal passages 19, including a fuel supply passage for supplying gaseous fuel to an engine and an exhaust passage for purging or discharge of residual gas.

In addition, the main block 10 may be formed to have an outer surface on which the flow control valve 20 is installed. For example, the main block 10 may be formed as a hexahedral square block.

Each internal passage 19 of the main block 10 may be connected to a fuel injection pipe connected to a fuel gas supply system, a fuel discharge pipe connected to the engine, a purge gas injection pipe, and a purge gas discharge pipe.

To this end, a fuel injection port 16 to which the fuel injection pipe is connected and a fuel discharge port 17 to which the fuel discharge pipe is connected may be formed on the side of the main block 10.

The fuel injection port 16 and the fuel discharge port 17 may be formed on opposite sides of the main block 10 and positioned on opposite sides.

The main block 10 may be provided with a purge gas injection port to which the purge gas injection pipe is connected and a purge gas discharge port to which the purge gas discharge pipe is connected, at positions spaced apart from each other.

The purge gas injection port and the purge gas discharge port are the parts through which purge gas, such as nitrogen, is introduced into and discharged from the internal passages 19 when the engine is shut down.

One end of the purge gas injection pipe may be connected to a purge gas storage tank in which purge gas is stored, and the other end may be connected to the purge gas injection port. In addition, one end of the purge gas discharge pipe may be connected to the purge gas discharge port, and the other end may be connected to the fuel supply line.

Meanwhile, a process filter 30 for removing impurities from the fuel supplied to the internal passages 19 may be provided in the fuel injection port 16. The process filter 30 may function as a protection device to prevent damage to high-precision parts such as valves provided in the gas valve train 1 and damage to an engine injector by removing impurities, and to safely supply high-pressure fuel gas to the engine.

The fuel injection pipe may be configured to be connected to the process filter 30 rather than directly to the fuel injection port 16, so that fuel is supplied to the fuel injection port 16 through the process filter 30.

The flow control valve 20 may be composed of a plurality of valves to be coupled with individual internal passages 19. The flow control valve 20 may open and close individual internal passages 19 according to the operation of the controller 50.

The plurality of flow control valves 20 may include: a master gas valve that performs the final main shut-off and opening functions of the internal passages 19; a slow open valve that gradually opens to relieve pressure and stabilize flow, preventing sudden pressure surges; a gas bleed valve that is connected to an exhaust passage for releasing gas from the internal passages 19 during engine shutdown or emergency situations; and a block valve that isolates and shuts off a specific section of individual internal passages 19.

The flow control valves 20 may be arranged and mounted vertically on the upper surface of the main block 10.

The upper surface of the main block 10 may be formed as a flat surface, and a plurality of valve mounting portions 11 for mounting the flow control valves 20 may be provided at positions spaced apart from each other.

The valve mounting portion 11 is formed by recessing downwards to a predetermined depth from the upper surface of the main block 10. A valve mounting space 12 may be formed within the valve mounting portion 11, the space 12 being connected to the internal passage 19 and into which a cage 500 of the flow control valve 20 is inserted and placed.

All the flow control valves 20 may be arranged and mounted vertically on the upper surface of the main block 10. At this time, the flow control valve 20 may be configured such that a stem 600 and a plug 700 for opening and closing the passage operate vertically in an up-and-down motion.

By forming the upper surface of the main block 10 as a flat surface, manufacturing the main block 10 becomes easier. Moreover, since all the flow control valves 20 are arranged on the upper surface of the main block 10, assembly of the flow control valves 20 is facilitated, and maintenance convenience may also be improved. In addition, since the stem 600 and the plug 700 of the flow control valve 20 are provided to operate vertically in an up-and-down motion, the generation of uneven stress due to tilting of a valve's reciprocating shaft may be prevented, thereby improving the service life and operational reliability of the flow control valves 20.

The controller 50 may check the state of the fuel passing through the gas valve train 1 and control the operation of each flow control valve 20.

The controller 50 may be configured to include a plurality of solenoid valves 51 and a plurality of pressure transmitters 52.

The solenoid valves 51 serve as a means to control the operation of each flow control valve 20, and the pressure transmitters 52 may monitor the fuel pressure and control the operation of the solenoid valves 51 accordingly.

The gas valve train 1, under the control of the controller 50, may adjust the opening of the internal passages 19 to regulate the fuel pressure and flow by controlling the operation of the flow control valves 20 according to the engine's output, load, and valve timing. This ensures that the optimal fuel quantity is supplied at the proper pressure. Additionally, the gas valve train 1, under the control of the controller 50, may shut off the fuel supply when necessary and perform blowdown and purging functions to safely discharge residual gas after engine shutdown.

For example, in case that the engine shuts down while the ship is in operation, an emergency fuel shut-off signal can be sent to the gas valve train 1 via the ship's control system. The gas valve train 1 then actuates the solenoid valves 51 to close the internal passages 19 by means of the flow control valves 20, thereby shutting off the fuel supply.

When fuel supply is interrupted, purging may be performed by injecting purge gas to remove residual high-pressure gas and clean the internal passages 19.

Since the operating configuration and principles of the gas valve train 1 are well known in the relevant field, a more detailed explanation is omitted.

Meanwhile, the flow control valves 20 according to an embodiment of the present disclosure may be configured to stably maintain a sealed state in an ultra-high-pressure environment exceeding 400 bar, and to have excellent durability and operational reliability.

Hereinafter, the flow control valve according to an embodiment of the present disclosure will be described in detail with reference to the drawings.

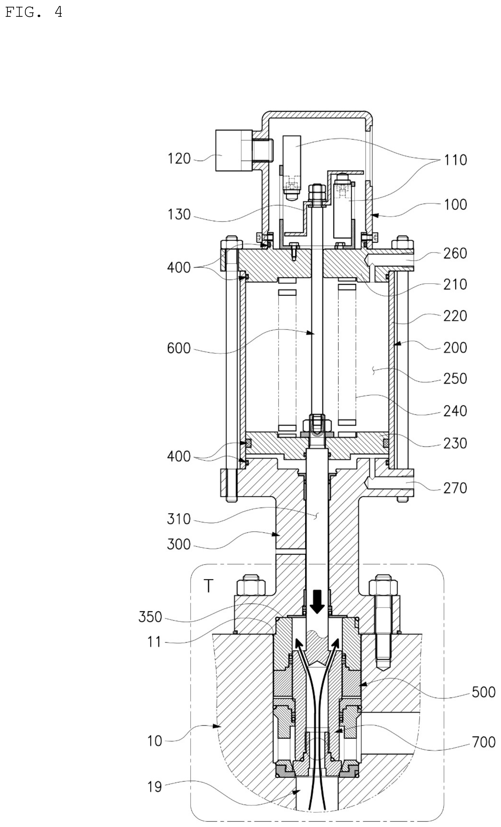

FIG. 4 is a longitudinal sectional view of a flow-control valve in a state where a plug has descended to shield an internal flow passage according to an embodiment of the present disclosure.

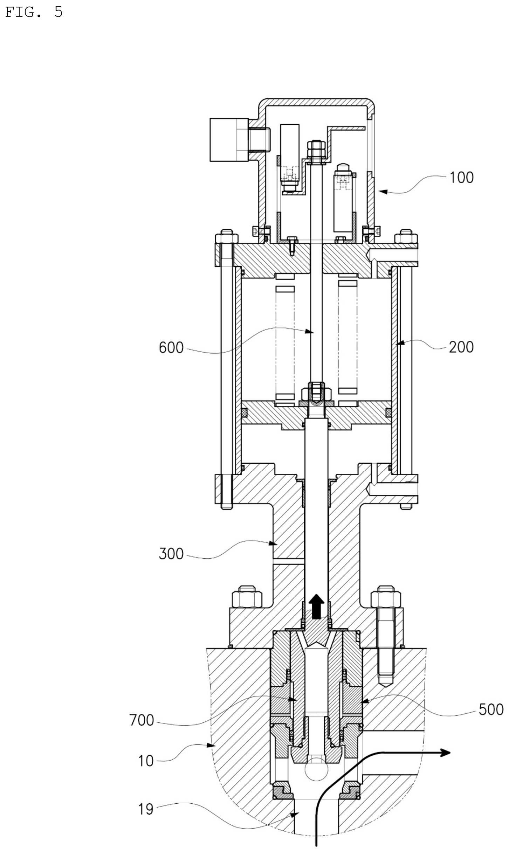

FIG. 5 is a longitudinal sectional view of a flow-control valve in a state where a plug has ascended to open an internal flow passage according to an embodiment of the present disclosure.

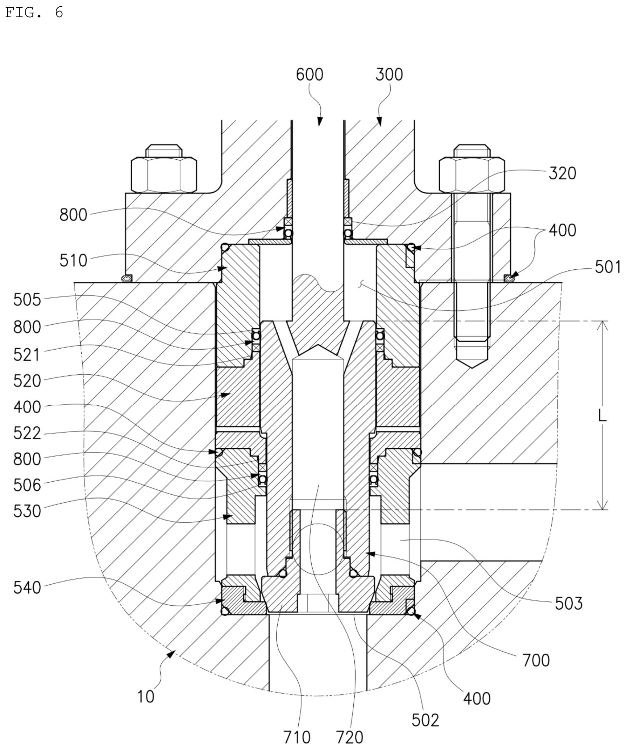

FIG. 6 is an enlarged view of the T part in FIG. 4.

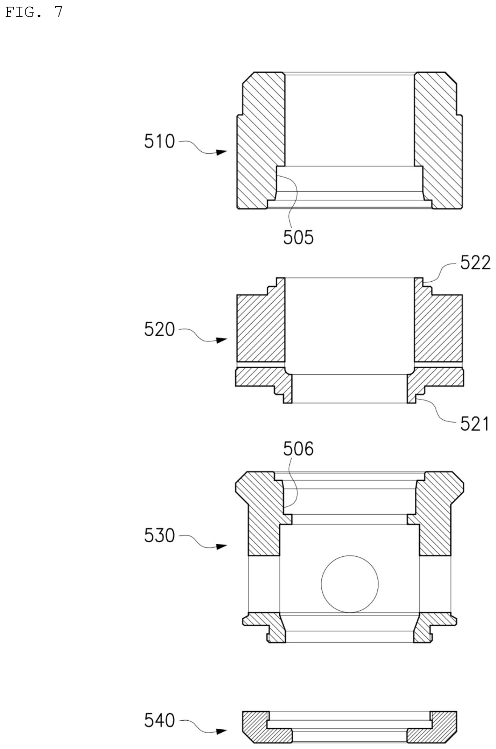

FIG. 7 is an exploded view of a cage according to an embodiment of the present disclosure.

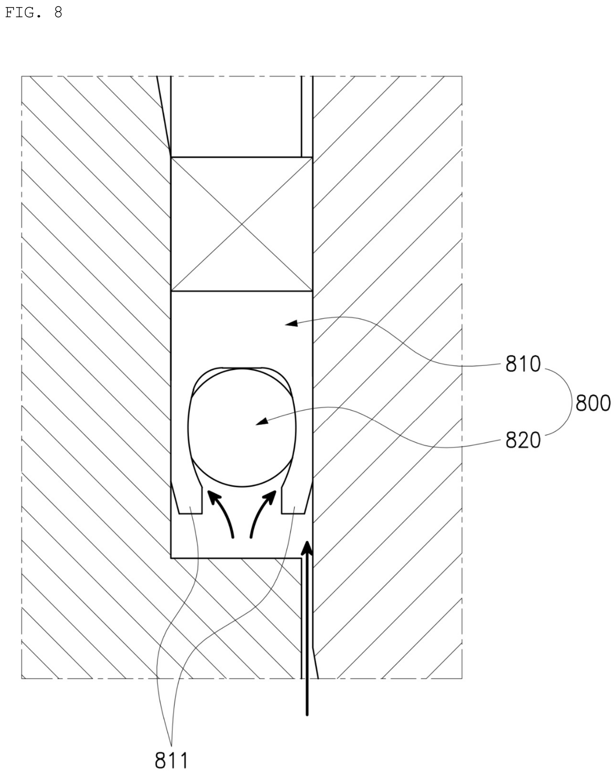

FIG. 8 is a view showing a U-seal according to an embodiment of the present disclosure.

The flow control valve 20 may include a switch portion 100, a cylinder portion 200, a bonnet 300, the cage 500, the stem 600, and the plug 700.

The switch portion 100, the cylinder portion 200, the bonnet 300, and the cage 500 are sequentially stacked and assembled from top to bottom, forming the outer structure of the flow control valve 20.

The stem 600 extends from the interior of the switch portion 100 to the interior of the cage 500, and may be configured to perform a reciprocating (up-and-down) motion by the operation of the cylinder portion 200.

The plug 700 is positioned inside the cage 500 and connected to the lower end of the stem 600 so as to move up and down with the reciprocating motion of the stem 600. According to the vertical movement of the plug 700, the internal passages 19 of the main block 10 that are in communication with the cage 500 may be opened and closed.

Below, each component of the flow control valve 20 will be described in more detail.

The switch portion 100 may be configured to detect the opening and closing operation of the flow control valve 20 and to provide a signal regarding the operating status of the valve 20 externally for monitoring the operation of the flow control valve 20.

The switch portion 100 constitutes the upper part of the flow control valve 20, and may have a limit switch 110 for detecting the advance and retreat of the stem 600 therein.

The limit switch 110 may be provided as a pair and may consist of a descent limit switch that detects the downward movement of the stem 600 and an ascent limit switch that detects the upward movement of the stem 600.

The upper end of the stem 600 may be positioned inside the switch portion 100.

A switch interlocking member 130 formed to contact the limit switches 110 when the stem 600 is raised or lowered may be provided at the upper end of the stem 600 located inside the switch portion 100.

The descent limit switch is arranged to come into contact with the switch interlocking member 130 when the stem 600 reaches the maximum downward position thereof, thereby detecting the downward movement of the stem 600 through the contact. The ascent limit switch is arranged to come into contact with the switch interlocking member 130 when the stem 600 reaches the maximum upward position thereof, thereby detecting the upward movement of the stem 600 through the contact.

A connector 120 may be provided on one side of the switch portion 100 that is electrically connected to the limit switches 110 and to which a cable for receiving a detection signal from the limit switches 110 is connected.

The switch portion 100 may be tightly fastened to the top of the cylinder portion 200 using a fastening member such as a bolt.

The cylinder portion 200 may include: a cylinder cover 210 to which the switch portion 100 is coupled and which constitutes the upper part of the cylinder portion 200; and a cylinder wall 220 extending downward along the perimeter of the cylinder cover 210.

The upper end of the cylinder wall 220 is tightly and closely joined to the lower perimeter of the cylinder cover 210, and an O-ring 400 may be provided between the cylinder wall 220 and the cylinder cover 210 to ensure sealing.

The lower end of the cylinder wall 220 is tightly and closely joined to the upper perimeter of the bonnet 300, and an O-ring 400 may be provided between the cylinder wall 220 and the bonnet 300 to ensure sealing.

Flange structures facing each other may be formed on the cylinder cover 210 and the bonnet 300, and the cylinder cover 210 and the bonnet 300 may be flange-coupled so as to be pressed toward each other by elongated bolts with the cylinder wall 220 interposed therebetween. Accordingly, the upper and lower ends of the cylinder wall 220 may be tightly joined to the cylinder cover 210 and the bonnet 300, respectively.

In the cylinder portion 200, a cylinder space 250 surrounded by the cylinder cover 210, the cylinder wall 220, and the upper part of the bonnet 300 may be formed.

In the cylinder portion 200, a piston 230 that divides the cylinder space 250 into upper and lower parts and is raised and lowered within the cylinder space 250 may be provided.

The cylinder space 250 may be divided into an upper cylinder space and a lower cylinder space based on the position of the piston 230, and the height of each space may vary according to the vertical movement of the piston 230.

A predetermined gap may be formed between the outer circumferential surface of the piston 230 and the inner circumferential surface of the cylinder wall 220 to allow the piston 230 to move vertically. The O-ring 400 may be provided around the outer circumference of the piston 230 to seal the gap between the piston 230 and the cylinder wall 220. The piston 230, with the circumference thereof in contact with the cylinder wall 220 by means of the O-ring 400, may hermetically partition the cylinder space 250 and slide along the cylinder wall 220.

The stem 600 penetrates the center of the piston 230, and the stem 600 may be fixed to the piston 230 within the cylinder space 250 so as to be raised and lowered together with the piston 230.

In the cylinder portion 200, an elastic member 240 that elastically presses the piston 230 downward may be further provided.

The elastic member 240 may be implemented as a compression spring and may be provided in the upper cylinder space.

The elastic member 240 is provided such that the upper end thereof is supported by the cylinder cover 210 and the lower end thereof is supported by the piston 230, so that the elastic member 240 may be compressed when the piston 230 rises and provide elastic force to the piston 230 in the downward direction.

The piston 230 may be moved up and down by fluid entering and exiting the cylinder space 250.

For example, the upper cylinder space may be communicated with an upper fluid path 260 through which a fluid such as air or oil is supplied for the descent of the piston 230.

In addition, the lower cylinder space may be communicated with a lower fluid path 270 through which a fluid such as air or oil is supplied for the ascent of the piston 230.

The upper fluid path 260 may be formed to penetrate one side of the cylinder cover 210 and communicate with the upper cylinder space and the outside.

In addition, the lower fluid path 270 may be formed to penetrate one side of the bonnet 300 and communicate with the lower cylinder space and the outside.

When fluid enters the upper cylinder space through the upper fluid path 260, the piston 230 is pushed downward by the supply pressure of the fluid and the elastic force of the elastic member 240, causing the upper cylinder space to expand. At this time, the fluid in the lower cylinder space is discharged to the outside through the lower fluid path 270, and the lower cylinder space may be reduced.

When fluid enters the lower cylinder space through the lower fluid path 270, the piston 230 is pushed upward by the supply pressure of the fluid, causing the lower cylinder space to expand. At this time, the fluid in the upper cylinder space is discharged to the outside through the upper fluid path 260, and the upper cylinder space may be reduced.

Thus, the stem 600 may be raised and lowered according to the raising and lowering (reciprocating motion) of the piston 230, and the plug 700 may be raised and lowered to open and close the internal passage 19.

The bonnet 300 is located below the cylinder portion 200 and forms an internal space for the vertical movement of the stem 600. A flange structure at the lower end of the bonnet 300 allows the bonnet 300 to be flange-coupled to the valve mounting portion 11 of the main block 10 using a bolt.

A through-hole 310 may be formed in the center of the bonnet 300 so that the stem 600 may be positioned to pass through the through-hole 310.

An O-ring 400 may be provided at the portion where the bonnet 300 and the valve mounting portion 11 face each other, so that the bonnet 300 and the valve mounting portion 11 may be tightly joined and sealed.

A cage receiving portion 350 may be formed in the lower center of the bonnet 300 in a shape corresponding to the upper shape of the cage 500 so that the upper part of the cage 500 may be received.

An O-ring 400 may be provided at the contact surface between the cage 500 and the cage receiving portion 350, allowing the cage 500 and the cage receiving portion 350 to be tightly joined and sealed.

Meanwhile, the cage 500 serves as a part that guides the lifting and lowering movement of the plug 600, and may be inserted and mounted in the valve mounting space 12 of the main block 10.

A cage space 501 that communicates with the internal passage 19 and forms the vertical movement space for the plug 600 may be provided inside the cage 500.

Based on the valve mounting space 12, the internal passage 19 may be divided into: a gas inlet passage, through which gas flows into the valve mounting space 12; and a gas outlet passage, through which gas is discharged from the valve mounting space 12.

At spaced-apart locations of the valve mounting space 12, a gas inlet 13 in communication with the gas inlet passage and a gas outlet 14 in communication with the gas outlet passage may be formed.

For example, the gas inlet 13 may be formed at the center of the bottom surface of the valve mounting space 12. In addition, the gas outlet 14 may be formed at the side of the valve mounting space 12.

The cage 500 may be seen as being placed on the internal passage 19, and be provided with a cage gas inlet 502 and a cage gas outlet 503, both of which are connected to the internal passage 19.

The cage space 501 of the cage 500 connects the gas inlet path and the gas discharge path. That is, the gas inlet passage and the gas outlet passage separated by the cage 500 are connected.

The cage 500 may be provided with: the cage gas inlet 502 that is in communication with the gas inlet 13 and allows gas to flow into the cage space 501 through the gas inlet passage; and the cage gas outlet 503 that is in communication with the gas outlet 14 and allows gas introduced into the cage space 501 to be discharged through the gas outlet passage.

The cage gas inlet 502 may be formed at the center of the bottom surface of the cage 500 corresponding to the position of the gas inlet 13.

In addition, the cage gas outlet 503 may be formed at the side of the cage 500 corresponding to the position of the gas outlet 14.

A plurality of O-rings 400 for sealing may be provided between the cage 500 and the valve mounting space 12.

For example, an O-ring 400 may be provided on the outer side of the cage gas inlet 502 and the gas inlet 13, between the facing lower surface of the cage 500 and the bottom surface of the valve mounting space 12, to seal the space therebetween.

At this time, the O-ring 400 provided between the lower surface of the cage 500 and the bottom surface of the valve mounting space 12 may function to seal a gas leak between the gas inlet 13 and the gas outlet 14 through the gap between the valve mounting space 12 and the cage 500.

In addition, an O-ring 400 may be provided on the upper side of the cage gas outlet 503 and the gas outlet 14, between the facing outer peripheral surface of the cage 500 and the inner peripheral surface of the valve mounting space 12, to seal the space therebetween.

In this way, the plurality of O-rings 400 provided between the cage 500 and the valve mounting space 12 prevents gas entering through the gas inlet 13 from leaking through the gaps between the cage 500 and the valve mounting space 12, allowing the gas to stably flow to the gas outlet 14 only through the interior of the cage 500.

Meanwhile, the plug 700 may vertically ascend and descend along the cage space 501 and, by ascending and descending, may open and close the space between the cage gas inlet 502 and the cage gas outlet 503. That is, the internal passage 19 may be opened and closed by the reciprocating motion of the plug 700.

The plug 700 may be formed in a shape roughly corresponding to the shape of the cage space 501 and may be configured to move vertically within the cage space 501 by having a vertical height smaller than the height of the cage space 501.

The outer circumferential surface of the plug 700 is sealed against the inner wall of the cage 500. When the plug 700 moves downward, the lower end thereof comes into close contact with the cage gas inlet 502, thereby blocking the space between the cage gas inlet 502 and the cage gas outlet 503, and ultimately closing off the internal passage 19.

In addition, when the plug 700 rises, the space between the plug 700 and the inner wall of the cage 500 allows communication between the cage gas inlet 502 and the cage gas outlet 503, thereby opening the internal passage 19.

At the bottom of the plug 700, an opening/closing end 710 that comes into close contact with the cage gas inlet 502 when the plug 700 is lowered may be formed.

The plug 700 may be provided with a plug through-hole 720 that extends vertically through the interior of the plug 700. The plug through-hole 720 may form a passage through which high-pressure gas supplied via the cage gas inlet 502 flows to the cage space 501 above the plug 700.

The plug through-hole 720 may communicate with the cage gas inlet 502.

With formation of the plug through-hole 720, the cage space 501 above the plug 700 and the cage space 501 below the plug 700 may reach gas pressure equilibrium, allowing the plug 700 to move vertically in a stable manner.

Meanwhile, in order for the flow control valve 20 to maintain a sealed state reliably and ensure stable operational reliability in an ultra-high-pressure environment exceeding 400 bar, it is necessary for the plug 700 and the cage 500 to be sealed securely.

In particular, when the plug through-hole 720 is formed in the plug 700 to achieve gas pressure equilibrium, if a reliable seal is not maintained between the plug 700 and the cage 500 above the cage gas inlet 502 and the cage gas outlet 503, gas entering the cage space 501 above the plug 700 may flow through the gap between the plug 700 and the cage (500) into the cage gas outlet 503. In other words, the closed state of the internal passage 19 is compromised.

In case that an O-ring is applied to seal between the plug 700 and the cage 500, maintaining a reliable seal in an ultra-high-pressure environment exceeding 400 bar is difficult, as the O-ring may be damaged or dislocated.

In particular, with the plug 700 moving vertically, in case that an O-ring is provided between the relatively moving plug 700 and the cage 500, the O-ring is more prone to damage, making it even more difficult to maintain a reliable seal.

Accordingly, the gas valve train 1 according to an embodiment of the present disclosure has a U-seal 800 between the plug 700 and the cage 500.

The U-seal 800 may be formed with a U-shaped cross-section and have a seal body 810 that forms a closed loop. The U-seal 800 has a pair of lips 811 facing each other across an internal space thereof, and is thus also referred to as a lip seal. The seal is a type of seal whose sealing performance is self-enhanced by gas pressure, and is also known as an energized seal.

When gas pressure acts on the internal space of the U-seal 800, the lips 811 spread outward and press more strongly against the opposing walls, providing higher sealing performance compared to an O-ring.

A spring 820 may be further provided inside the seal body 810 to enhance elastic recovery, improve pressure responsiveness, maintain stable shape, and increase the contact force of the lips against the outer walls.

In the present disclosure, an embodiment is disclosed in which the seal 800 having the spring 820 is applied to an internal space of a "U" shape.

Since the U-seal 800 is provided with the spring 820 in the internal space thereof, the U-seal 800 may maintain a stable shape even under friction caused by the vertical movement of the plug 700, thereby providing more reliable sealing performance compared to an O-ring.

The U-seal 800 may be disposed between the inner wall of the cage 500 and the outer circumferential surface of the plug 700 above the cage gas inlet 502 and the cage gas outlet 503.

At this time, the U-seal 800 may be provided on the inner wall of the cage 500 within a constantly facing section L, defined as the upper and lower sections of the cage 500 that always face the outer circumferential surface of the plug 700 during the vertical movement of the plug 700, above the cage gas inlet 502 and the cage gas outlet 503.

That is, the U-seal 800 may be provided on the inner wall of the cage 500 that constantly faces the outer circumferential surface of the plug 700, including when the plug 700 is at the maximum raised and lowered positions thereof.

To be specific, the U-seal 800 may be provided as a plurality of seals spaced vertically within the constantly facing section L.

As an example, the U-seal 800 may be provided on the inner wall of the cage 500 at the upper part of the constantly facing section L.

In addition, the U-seal 800 may be provided on the inner wall of the cage 500 at the lower part of the constantly facing section L.

To this end, at the upper part of the constantly facing section L on the inner wall of the cage 500, an upper sealing-member mounting portion 505 recessed outward may be formed to provide a mounting space for the U-seal 800. Similarly, at the lower part of the constantly facing section L on the inner wall of the cage 500, a lower sealing-member mounting portion 506 recessed outward may be formed to provide a mounting space for the U-seal 800.

That is, the upper sealing-member mounting portion 505 and the lower sealing-member mounting portion 506 may be formed spaced apart from each other vertically within the constantly facing section L.

The U-seal 800 provided in the upper sealing-member mounting portion 505 may function to prevent gas, which enters the cage space 501 above the plug 700 through the plug through-hole 720, from leaking through the gap between the plug 700 and the upper side of the cage 500.

The U-seal 800 provided in the upper sealing-member mounting portion 505 may be configured such that the internal space thereof is open toward the upper side. Thus, when gas introduced into the cage space 501 above the plug 700 enters the gap between the plug 700 and the cage 500, the pair of lips 811 is caused to spread inwardly and outwardly due to the gas pressure. An inner lip 811 then adheres to the outer wall of the plug 700, whereas an outer lip 811 adheres to the inner wall of the cage 500, thereby forming a stable airtight seal.

The U-seal 800 provided in the lower sealing-member mounting portion 506 may function to prevent gas, which enters the cage space 501 below the plug 700 when the internal passage 19 is opened by the upward movement of the plug 700, from entering the gap between the plug 700 and the lower side of the cage 500.

The U-seal 800 provided in the lower sealing-member mounting portion 506 may be configured such that the internal space thereof is open toward the lower side. Thus, when gas enters the gap between the plug 700 and the lower side of the cage 500, the pair of lips 811 is caused to spread inwardly and outwardly due to the gas pressure. The inner **lip** 811 then adheres to the outer wall of the plug 700, whereas the outer lip 811 adheres to the inner wall of the cage 500, thereby forming a stable airtight seal.

Meanwhile, the cage 500 may be configured as a combination of a plurality of components separated into upper and lower parts so that the U-seal 800 may be easily mounted to the upper sealing-member mounting portion 505 and the lower sealing-member mounting portion 506.

To be specific, the cage 500 may include an upper cage 510 and a middle cage 520, which are separated vertically based on the upper sealing-member mounting portion 505.

In addition, the cage 500 may include a lower cage 530 that is separated from the middle cage 520 based on the lower sealing-member mounting portion 506.

The upper cage 510, the middle cage 520, and the lower cage 530 may have a structure in which the upper cage 510, the middle cage 520, and the lower cage 530 are sequentially stacked from top to bottom.

The cage gas inlet 502 and the cage gas outlet 503 may be formed in the lower cage 530.

The upper sealing-member mounting portion 505 may be formed to open upward or downward by the separation of the upper cage 510 and the middle cage 520. In addition, the lower sealing-member mounting portion 506 may be formed to open upward or downward by the separation of the middle cage 520 and the lower cage 530.

As an example, the lower sealing-member mounting portion 506, which is recessed outward, may be formed on an upper inner surface of the lower cage 530 positioned above the cage gas outlet 503.

In this case, when the middle cage 520 is separated, the lower sealing-member mounting portion 506 has an upwardly open shape, thereby allowing the U-seal 800 to be easily inserted and mounted from above.

In addition, when the middle cage 520 is seated on the upper end of the lower cage 530, the upper opening of the lower sealing-member mounting portion 506 may be blocked by the lower surface of the middle cage 520.

That is, the middle cage 520 may be formed such that the lower sealing-member mounting portion 506 is open outward and upward, and a lower opening blocking portion 521 for blocking the upward opening of the lower sealing-member mounting portion 506 may be formed on the lower surface of the middle cage 520.

In addition, the upper sealing-member mounting portion 505, which is recessed outward, may be formed on a lower inner surface of the upper cage 510.

In this case, when the upper cage 510 is separated from the middle cage 520, the upper sealing-member mounting portion 505 has a downwardly open shape, allowing the U-seal 800 to be easily inserted and mounted from below.

In addition, when the upper cage 510 is seated on the upper end of the middle cage 520, the downward opening of the upper sealing-member mounting portion 505 may be blocked by the upper surface of the middle cage 520.

That is, the upper cage 510 may be formed such that the upper sealing-member mounting portion 505 is open downward, and an upper opening blocking portion 522 for blocking the downward opening of the upper sealing-member mounting portion 505 may be formed on the upper surface of the middle cage 520.

Meanwhile, the lower surface of the upper cage 510 and the upper surface of the middle cage 520 may face each other outside the upper sealing-member mounting portion 505 and be formed in a fitting shape. As an example, the lower surface of the upper cage 510 and the upper surface of the middle cage 520 may be formed to fit in a stepped shape with multiple stages from the inside to the outside to ensure sealing therebetween.

In addition, the lower surface of the middle cage 520 and the upper surface of the lower cage 530 may face each other outside the lower sealing-member mounting portion 506 and be formed in a fitting shape. As an example, the lower surface of the middle cage 520 and the upper surface of the lower cage 530 may be formed to fit in a stepped shape with multiple stages from the inside to the outside to ensure sealing therebetween.

Meanwhile, the cage 500 may further include a disc sheet 540 provided on the lower surface of the lower cage 530 and constituting the bottom of the cage 500.

The disc sheet 540 may be formed as a separate component from the lower cage 530 and coupled such that the lower cage 530 is stacked on the upper surface thereof.

The disc sheet 540 constitutes the bottom of the lower part of the cage gas inlet 502 and may be provided on the bottom surface of the valve mounting portion 11 along the periphery of the gas inlet 13.

The disc sheet 540 serves as the part with which the lower end of the plug 700 substantially comes into contact when the plug 700 descends to block the passage, and may be made of a material having elasticity to ensure stable sealing and impact absorption.

Meanwhile, a bonnet sealing-member mounting portion 320, recessed outward in a stepped manner, may be formed on the lower end of the peripheral surface of the through-hole 310 of the bonnet 300.

The U-seal 800 may also be provided on the bonnet sealing-member mounting portion 320.

The U-seal 800 provided on the bonnet sealing-member mounting portion 320 may function to prevent gas, which has entered the cage space 501 above the plug 700 through the plug through-hole 720, from flowing into the gap between the through-hole 310 of the bonnet 300 and the stem 600.

The U-seal 800 provided on the bonnet sealing-member mounting portion 320 may be configured such that the internal space thereof is open downward toward the cage space 501. Accordingly, in case that gas enters the gap between the inner peripheral surface of the through-hole 310 and the stem 600, the gas pressure causes the pair of lips 811 of the U-seal 800 to spread outward and inward. The inner lip 811 comes into close contact with the outer peripheral surface of the stem 600, whereas the outer lip 811 comes into close contact with the inner peripheral surface of the through-hole 310, thereby forming a stable seal.

## Claims

1. A gas valve train comprising:
a main block in which an internal passage for supplying fuel gas to an engine is provided, and a plurality of valve mounting portions is provided on an upper surface thereof, recessed downward to communicate with the internal passage;
a flow control valve mounted on each of the valve mounting portions, and configured to control an opening of the internal passage; and
a controller configured to check a state of fuel gas supplied to the main block and control an operation of the flow control valve so that a pressure and flow rate of fuel required by the engine are supplied,
wherein the flow control valve comprises:
a bonnet installed on the upper surface of the main block, outside the valve mounting portion, and having a hollow center extending vertically;
a cage provided below the bonnet and inserted into the valve mounting portion to be arranged on the internal passage, having a cage space formed therein, and including a cage gas inlet and a cage gas outlet at a lower part thereof that connect the cage space to the internal passage;
a stem that penetrates the center of the bonnet and has a lower end thereof positioned in the cage space;
a cylinder portion provided above the bonnet, connected to an upper end of the stem, and configured to move the stem up and down in a reciprocating manner; and
a plug provided in the cage space, connected to the lower end of the stem to reciprocate together with the stem, configured to open and close the internal passage by opening and closing between the cage gas inlet and the cage gas outlet through the reciprocating movement,
wherein a U-seal for sealing is provided between an outer wall of the plug and an inner wall of the cage, above the cage gas inlet and the cage gas outlet.

2. The gas valve train of claim 1, wherein the plug has a plug through-hole that vertically penetrates a center thereof and communicates with the cage gas inlet, so that when the plug descends, fuel gas flows through the plug through-hole into the cage space above the plug, thereby equalizing pressure, and
the U-seal is provided, above the cage gas inlet and the cage gas outlet, on the inner wall of the cage within a constantly facing section (L) of the cage, defined as upper and lower sections of the cage that constantly face the outer wall of the plug during the reciprocating movement of the plug.

3. The gas valve train of claim 2, wherein an upper sealing-member mounting portion recessed outward is provided on the inner wall of the cage at an upper part of the constantly facing section (L), whereas a lower sealing-member mounting portion recessed outward is provided at a lower part of the constantly facing section (L), and
the U-seal is provided on each of the upper sealing-member mounting portion and the lower sealing-member mounting portion,
wherein the U-seal provided on the upper sealing-member mounting portion has an internal space open upward, whereas the U-seal provided on the lower sealing-member mounting portion has an internal space open downward.

4. The gas valve train of claim 3, wherein the cage comprises:
a lower cage in which the cage gas inlet and the cage gas outlet are provided and constituting the lower part of the cage;
a middle cage stacked on an upper surface of the lower cage and constituting a middle part of the cage; and
an upper cage stacked on an upper surface of the middle cage and constituting an upper part of the cage,
wherein the upper sealing-member mounting portion is provided between the upper cage and the middle cage and is opened upward or downward by a separation of the upper cage and the middle cage, and
the lower sealing-member mounting portion is provided between the lower cage and the middle cage and is opened upward or downward by a separation of the lower cage and the middle cage.

5. The gas valve train of claim 2, wherein a bonnet sealing-member mounting portion, recessed outward in a stepped manner, is provided on a lower end of an inner peripheral surface of the bonnet, and
a U-seal for sealing a gap between the inner peripheral surface of the bonnet and the stem is further provided on the bonnet sealing-member mounting portion.
